(19) 

**Europäisches Patentamt**
**European Patent Office**
**Office européen des brevets**

(11) **EP 4 333 113 A1**

(12) **EUROPEAN PATENT APPLICATION**
published in accordance with Art. 153(4) EPC

(43) Date of publication:
**06.03.2024 Bulletin 2024/10**

(21) Application number: **22887761.9**

(22) Date of filing: **01.11.2022**

(51) International Patent Classification (IPC):
*H01M 4/1391* (2010.01)     *H01M 4/04* (2006.01)
*H01M 4/48* (2010.01)      *H01M 10/052* (2010.01)
*H01M 4/02* (2006.01)

(52) Cooperative Patent Classification (CPC):
**H01M 4/02; H01M 4/04; H01M 4/1391; H01M 4/48;**
**H01M 10/052; Y02E 60/10**

(86) International application number:
**PCT/KR2022/016908**

(87) International publication number:
**WO 2023/075567 (04.05.2023 Gazette 2023/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **01.11.2021 KR 20210148034**

(71) Applicant: **LG Energy Solution, Ltd.**
**Seoul 07335 (KR)**

(72) Inventors:
• **OH, Ilgeun**
**Daejeon 34122 (KR)**

• **CHOI, Junghyun**
**Daejeon 34122 (KR)**
• **SHIN, Sun Young**
**Daejeon 34122 (KR)**
• **LEE, Yong Ju**
**Daejeon 34122 (KR)**
• **PARK, Semi**
**Daejeon 34122 (KR)**
• **PARK, Heeyeon**
**Daejeon 34122 (KR)**

(74) Representative: **Hoffmann Eitle**
**Patent- und Rechtsanwälte PartmbB**
**Arabellastraße 30**
**81925 München (DE)**

(54) **ANODE MANUFACTURING METHOD, ANODE, AND SECONDARY BATTERY COMPRISING SAME**

(57) An aspect provides a manufacturing method of a negative electrode, a negative electrode, and a secondary battery comprising the same.

EP 4 333 113 A1

**Description**

[Technical Field]

This application claims priority to and the benefit of Korean Patent Application No. 10-2021-0148034 filed in the Korean Intellectual Property Office on November 1, 2021, the entire contents of which are incorporated herein by reference.

The present invention relates to a manufacturing method of a negative electrode, a negative electrode, and a secondary battery comprising the same.

[Background Art]

Recently, with the rapid spread of electronic devices using batteries such as mobile phones, notebook computers, and electric vehicles, the demand for small, lightweight, and relatively high-capacity secondary batteries is rapidly increasing. In particular, lithium secondary batteries are in the limelight as a driving power source for portable devices due to a lightweight and high energy density. Accordingly, research and development efforts to improve the performance of lithium secondary batteries have been actively conducted.

In general, a lithium secondary battery includes a positive electrode, a negative electrode, a separator interposed between the positive electrode and the negative electrode, an electrolyte, an organic solvent, and the like. In addition, active material layers including a positive electrode active material and a negative electrode active material may be formed on a current collector in the positive electrode and the negative electrode, respectively. In general, a lithium-containing metal oxide such as $LiCoO_2$ or $LiMn_2O_4$ is used as the positive electrode active material in the positive electrode, and a carbon-based active material or a silicon-based active material without containing lithium is used as the negative electrode active material in the negative electrode.

Among negative electrode active materials, a silicon-based active material has attracted attention due to a higher capacity than a carbon-based active material and has excellent high-speed charging characteristics. However, the silicon-based active material has a disadvantage of having low initial efficiency due to a high degree of volume expansion/contraction according to charging and discharging and a high irreversible capacity.

Meanwhile, among silicon-based active materials, a silicon-based oxide, specifically a silicon-based oxide represented by SiOx (0 < x < 2), has an advantage of a low degree of volume expansion/contraction according to charging and discharging compared to other silicon-based active materials such as silicon (Si). However, the silicon-based oxide still has a disadvantage in that initial efficiency is lowered depending on the presence of an irreversible capacity.

In this regard, research on reducing the irreversible capacity and improving the initial efficiency by doping or intercalating metals such as Li, Al, and Mg into the silicon-based oxide has continued. However, in the case of negative electrode slurry containing a metal-doped silicon-based oxide as a negative electrode active material, there is a problem in that the metal oxide formed by doping the metal reacts with moisture to increase the pH and change the viscosity of the negative electrode slurry. Accordingly, there is a problem that the state of the manufactured negative electrode is deteriorated and the charging and discharging efficiency of the negative electrode is lowered.

Accordingly, there is a need to develop a method capable of improving the phase stability of the negative electrode slurry containing the silicon-based oxide and improving the charge/discharge efficiency and lifespan of a negative electrode manufactured therefrom.

[Prior Arts]

(Patent Document 1) Korean Patent Registration No. 10-0794192

[Disclosure]

[Technical Problem]

An aspect provides a manufacturing method of a negative electrode, a negative electrode, and a secondary battery comprising the same.

[Technical Solution]

According to an aspect, there is provided a manufacturing method of a negative electrode including steps of: preparing a preliminary negative electrode slurry containing a negative electrode active material containing silicon-based particles containing a Li compound and a conductive material; forming a negative electrode slurry by adding and mixing an acid to the preliminary negative electrode slurry; forming a negative electrode active material layer by applying the negative electrode slurry on at least one surface of a current collector and first drying and rolling the slurry; and second drying the current collector on which the negative electrode active material layer is formed, in which the pH of the negative electrode slurry at 25°C is 10 or more and less than 12.5.

According to another aspect, there is provided a negative electrode manufactured by the manufacturing method.

According to yet another aspect, there is provided a negative electrode including a current collector; and a negative electrode active material layer provided on the current collector, in which the negative electrode active material layer includes a negative electrode active material, the negative electrode active material includes silicon-based particles containing a Li compound, and the pH of a dispersion obtained by mixing 5 g of the negative electrode active material layer and 100 g of water after the negative electrode active material layer is separated from the current collector is 10 or more and less than 12.5 at 25°C.

According to still another aspect, there is provided a secondary battery including the negative electrode.

[Advantageous Effects]

According to the manufacturing method of the present invention, it is possible to suppress side reactions of the negative electrode slurry due to the acid addition, and to improve the phase stability of the slurry by lowering the pH of the slurry. In addition, it is possible to increase the porosity around the negative electrode active material by the lithium silicate gel produced by acid addition when manufacturing the electrode. Accordingly, it is possible to secure a space around the negative electrode active material in the electrode to minimize electrode deformation due to volume expansion of the negative electrode active material, thereby improving the lifespan of the electrode.

In addition, in the case of a conventional negative electrode using silicon-based particles containing a Li compound, the slurry becomes basic when preparing an aqueous slurry by lithium by-products, and a dispersion in which a negative electrode active material layer is dispersed has a high pH. On the other hand, although the negative electrode according to the present invention includes silicon-based particles containing a Li compound, the dispersion in which the negative electrode active material layer is dispersed has a relatively low pH, so that a battery using the negative electrode may exhibit significantly improved charge/discharge capacity, initial efficiency, and lifespan.

[Best Mode]

Hereinafter, this specification will be described in more detail.

Throughout the specification, a case where a part "comprises" an element will be understood to imply the inclusion of stated elements but not the exclusion of any other elements unless explicitly described to the contrary.

In the specification, it will be understood that when a member is referred to as being "on" the other member, one member can be directly on the other member or another member may also be present between both members.

Terms and words used in the present specification and claims should not be interpreted as being limited to typical or dictionary meanings, but should be interpreted as having meanings and concepts which comply with the technical spirit of the present invention, based on the principle that an inventor can appropriately define the concept of the term to describe his/her own invention in the best manner.

A singular form used in this specification may include a plural form unless otherwise clearly noted in the context.

In the present specification, the presence or absence of elements and the content of elements in the negative electrode active material may be confirmed through ICP analysis, and the ICP analysis may be performed using an inductively coupled plasma emission spectrometer (ICPAES, Perkin-Elmer 7300).

In the present specification, an average particle diameter (D50) may be defined as a particle diameter corresponding to 50% of a cumulative volume in a particle size distribution curve (graph curve of the particle size distribution) of particles. The average particle diameter (D50) may be measured using, for example, a laser diffraction method. The laser diffraction method is generally capable of measuring particle diameters of several millimeters in a submicron region, and may obtain results of high reproducibility and high resolution.

In the present specification, a "BET specific surface area" may be measured by a BET 6-point method by degassing at 130°C for 5 hours and performing $N_2$ absorption/desorption at 77 K using a BET measuring device (BEL-SORP-MAX, Nippon Bell) for a measured object.

Hereinafter, preferred example embodiments of the present invention will be described in detail. However, the example embodiments of the present invention may be modified in various forms, and the scope of the present invention is not limited to example embodiments to be described below.

An example embodiment of the present invention provides a manufacturing method of a negative electrode comprising steps of: preparing a preliminary negative electrode slurry containing a negative electrode active material containing silicon-based particles containing a Li compound and a conductive material (S1); forming a negative electrode slurry by adding and mixing an acid to the preliminary negative electrode slurry (S2); forming a negative electrode active material layer by applying the negative electrode slurry on at least one surface of a current collector and first drying and rolling the slurry (S3); and second drying the current collector on which the negative electrode active material layer is formed (S4), wherein the pH of the negative electrode slurry at 25°C is 10 or more and less than 12.5.

In general, when Li is doped into the silicon-based oxide, there is an advantage of increasing initial efficiency, but there is a problem that an aqueous slurry becomes basic during preparing due to lithium by-products unreacting with the silicon-based oxide, and Si and a base (OH-) of the negative electrode active material react with each other to generate gas and rheological properties are changed.

In order to solve this problem, the reaction between the base (OH-) and Si may be suppressed by adding an acid in the process of mixing the slurry to neutralize the base in the slurry. In addition, since the acid and lithium silicate react with each other to form a lithium silicate gel when the acid is added, in the step of coating, drying, and rolling the negative electrode slurry on the current collector, and then finally drying the electrode, water adsorbed on the lithium silicate gel evaporates to induce the volume shrinkage of the gel. Accordingly, pores are increased around the negative electrode active material to secure a space around the negative electrode active material, and the electrode deformation due to volume expansion of the negative electrode active material is minimized to have an effect of improving the lifespan.

In addition, the produced lithium silicate gel shrinks to be coated around the silicon-based particles, and the lithium silicate gel coating layer acts as a resistor to prevent Li elution from the silicon-based particles.

The manufacturing method of the negative electrode according to an example embodiment of the present invention includes preparing a preliminary negative electrode slurry containing a negative electrode active material containing silicon-based particles containing a Li compound and a conductive material (S1).

In an example embodiment of the present invention, the negative electrode active material may include silicon-based particles including $SiOx$ ($0 < x < 2$) and a Li compound.

The $SiOx$ ($0 < x < 2$) corresponds to a matrix in the silicon-based particles. The $SiOx$ ($0 < x < 2$) may be a form including Si and $SiO_2$, and the Si may also form a phase. That is, the x corresponds to the number ratio of O to Si included in the $SiOx$ ($0 < x < 2$). When the silicon-based particle includes the $SiOx$ ($0 < x < 2$), the discharge capacity of the secondary battery may be improved.

The silicon-based particle includes a Li compound. The Li compound may exist in the form of at least one of lithium atoms, lithium silicate, lithium silicide, and lithium oxide in the silicon-based particle, and preferably exist in the form of lithium silicate. When the silicon-based particle includes the Li compound, there is an effect of improving initial efficiency.

The Li compound may be included in the silicon-based particle by heating and vaporizing mixed powder of Si and $SiO_2$, forming SiO by depositing the vaporized mixed gas, mixing the formed SiO and Li powder, and then performing heat treatment.

That is, the Li compound may be distributed on the surface and/or inside of the silicon-based particle in a doped form into the silicon-based particle. The Li compound may be distributed on the surface and/or inside of the silicon-based particle to control the volume expansion/contraction of the silicon-based particle to an appropriate level and prevent damage to the active material. In addition, the Li compound may be included in order to increase the efficiency of the active material by lowering the ratio of the irreversible phase (e.g., $SiO_2$) of the silicon-based oxide particle.

The Li compound may be lithium silicate, and the lithium silicate is represented by $Li_aSi_bO_c$ ($2 \leq a \leq 4$, $0 < b \leq 2$, $2 \leq c \leq 5$), and may be present in the form of at least one lithium silicate selected from the group consisting of $Li_2SiO_3$, $Li_4SiO_4$ and $Li_2Si_2O_5$ in the silicon-based particle.

In an example embodiment of the present invention, the Li may be included in an amount of 1 part by weight to 20 parts by weight, 4 parts by weight to 12 parts by weight, or 5 parts by weight to 10 parts by weight based on 100 parts by weight of the total negative electrode active material. The Li may be included in an amount of specifically 6 parts by weight to 9 parts by weight, more specifically 7 parts by weight to 8 parts by weight. As the Li content increases, the initial efficiency increases, but there is a problem in that the discharge capacity decreases. Therefore, when the above range is satisfied, appropriate discharge capacity and initial efficiency may be implemented.

The content of the Li element may be confirmed through ICP analysis. Specifically, a predetermined amount (about 0.01 g) of the negative electrode active material was aliquoted, transferred to a platinum crucible, added with nitric acid, hydrofluoric acid, and sulfuric acid, and then completely decomposed on a hot plate. Then, by using an induced plasma emission spectrometer (ICPAES, Perkin-Elmer 7300), a standard calibration curve is prepared by measuring the intensity of a standard solution prepared using a standard solution (5 mg/kg) at an intrinsic wavelength of an element to be analyzed. Thereafter, a pretreated sample solution and a blank sample are introduced into an instrument, each intensity is measured to calculate an actual intensity, the concentration of each component with respect to the prepared calibration curve is calculated, and then the total sum is converted to a theoretical value to analyze the elemental content of the prepared negative electrode active material.

A carbon layer may be provided on at least a part of the surface of the silicon-based particle according to an example embodiment of the present invention. In this case, the carbon layer may be coated on at least a part of the surface, that is, partially on the surface of the particle, or may be coated on the entire surface of the particle. Conductivity is imparted to the negative electrode active material by the carbon layer, and the initial efficiency, lifespan characteristics, and battery capacity characteristics of the secondary battery may be improved.

Specifically, the carbon layer may include crystalline carbon or amorphous carbon, preferably amorphous carbon.

The crystalline carbon may further improve the conductivity of the negative electrode active material. The crystalline carbon may include at least one selected from the group consisting of fluorene, carbon nanotube, and graphene.

The amorphous carbon may properly maintain the strength of the carbon layer and suppress the expansion of the silicon-based particle. The amorphous carbon may be a carbon-based material formed by using at least one carbide selected from the group consisting of tar, pitch, and other organic materials, or hydrocarbon as a source of a chemical vapor deposition method.

The carbides of other organic materials may be carbides of sucrose, glucose, galactose, fructose, lactose, mannose, ribose, aldohexose or ketohexose, and carbides of organic materials selected from combinations thereof.

The hydrocarbon may be substituted or unsubstituted aliphatic or alicyclic hydrocarbon or substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutene, hexane, or the like. The aromatic hydrocarbon of the substituted or unsubstituted aromatic hydrocarbon may include benzene, toluene, xylene, styrene, ethylbenzene, diphenylmethane, naphthalene, phenol, cresol, nitrobenzene, chlorobenzene, indene, coumaron, pyridine, anthracene, phenanthrene, or the like.

Specifically, the carbon layer may be formed by heat treatment after disposing a carbonaceous precursor on the silicon-based particle. The carbonaceous precursor may be graphene and graphite for producing crystalline carbon, and may be a carbon-based material formed by using at least one carbide selected from the group consisting of tar, pitch, and other organic materials for producing amorphous carbon, or hydrocarbon such as methane, ethane, and acetylene as a source for a chemical vapor deposition method.

An average particle diameter (D50) of the negative electrode active material may be 0.1 $\mu$m to 30 $\mu$m, specifically 1 $\mu$m to 20 $\mu$m, more specifically 1 $\mu$m to 10 $\mu$m. When the above range is satisfied, it is possible to ensure the structural stability of the active material during charging and discharging, prevent a problem of increasing the level of volume expansion/contraction as the particle diameter becomes excessively large, and prevent a problem of reducing the initial efficiency as the particle diameter becomes excessively low.

The particle size of the negative electrode active material may be adjusted through a method such as a ball mill, a jet mill, or air flow classification, but is not limited thereto.

In an example embodiment of the present invention, the preliminary negative electrode slurry includes the negative electrode active material and the conductive material.

The preliminary negative electrode slurry may further include an additional negative electrode active material.

As the additional negative electrode active material, a compound capable of reversible intercalation and deintercalation of lithium may be used. Specific examples thereof may include carbonaceous materials such as artificial graphite, natural graphite, graphitized carbon fiber, and amorphous carbon; metallic compounds capable of being alloyed with lithium, such as Si, Al, Sn, Pb, Zn, Bi, In, Mg, Ga, Cd, Si alloys, Sn alloys, or Al alloys; metal oxides capable of doping and undoping lithium, such as SiO$\beta$ ($0 < \beta < 2$), SnO$_2$, vanadium oxide, lithium titanium oxide, and lithium vanadium oxide; composites including the metallic compound and the carbonaceous material, such as a Si-C composite or a Sn-C composite, or the like, and any one thereof or mixtures of two or more thereof may be used. In addition, a metal lithium thin film may also be used as the negative electrode active material. Alternatively, as the carbon material, both low crystalline carbon and high crystalline carbon may be used. Representative examples of the low crystalline carbon are soft carbon and hard carbon, and representative examples of the high crystalline carbon are high-temperature calcinated carbons such as amorphous, platy, scaly, spherical or fibrous natural graphite or artificial graphite, Kish graphite, pyrolytic carbon, mesophase pitch based carbon fiber, meso-carbon microbeads, mesophase pitches, and petroleum or coal tar pitch derived cokes.

The additional negative electrode active material may be a carbon-based negative electrode active material.

In an example embodiment of the present invention, a weight ratio of the negative electrode active material and the additional negative electrode active material included in the preliminary negative electrode slurry may be 10:90 to 90:10, specifically 10:90 to 50:50.

In an example embodiment of the present invention, the preliminary negative electrode slurry may further include a thickener. The thickener may be carboxymethylcellulose (CMC), but is not limited thereto, and thickeners used in the art may be appropriately employed.

In an example embodiment of the present invention, the preliminary negative electrode slurry may further include a binder. The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, poly acrylic acid and materials in which hydrogen thereof is substituted with Li, Na or Ca, and also include various copolymers thereof.

In an example embodiment of the present invention, the conductive material is not particularly limited as long as any conductive material has conductivity without causing a chemical change in the corresponding battery. For example, the conductive material may use graphite such as natural graphite or artificial graphite; carbon black such as acetylene black, ketjen black, channel black, furnace black, lamp black, and thermal black; conductive fibers such as carbon fiber and metal fiber; conductive tubes such as carbon nanotubes; metal powders such as fluorocarbon, aluminum, and nickel powder; conductive whiskers such as zinc oxide and potassium titanate; conductive metal oxides such as titanium oxide; conductive materials such as polyphenylene derivatives, and the like.

In an example embodiment of the present invention, the negative electrode active material may be included in the preliminary negative electrode slurry in an amount of 60 parts by weight to 99 parts by weight, specifically 70 parts by weight to 98 parts by weight based on 100 parts by weight of the total solid content of the preliminary negative electrode slurry.

In an example embodiment of the present invention, the conductive material may be included in the preliminary negative electrode slurry in an amount of 0.5 part by weight to 25 parts by weight, specifically 0.5 part by weight to 20 parts by weight, more specifically 1 part by weight to 20 parts by weight, 1 part by weight to 10 parts by weight, or 1 part by weight to 5 parts by weight, based on 100 parts by weight of the total solid content of the preliminary negative electrode slurry.

In an example embodiment of the present invention, the thickener may be included in the preliminary negative electrode slurry in an amount of 0.5 part by weight to 25 parts by weight, specifically 0.5 part by weight to 20 parts by weight, more specifically 1 part by weight to 20 parts by weight, based on 100 parts by weight of the total solid content of the preliminary negative electrode slurry.

In an example embodiment of the present invention, the binder may be included in the preliminary negative electrode slurry in an amount of 0.5 part by weight to 30 parts by weight, specifically 0.5 part by weight to 20 parts by weight, more specifically 1 part by weight to 20 parts by weight, based on 100 parts by weight of the total solid content of the preliminary negative electrode slurry.

The preliminary negative electrode slurry according to an example embodiment of the present invention may further include a solvent for forming the negative electrode slurry. Specifically, the solvent for forming the negative electrode slurry may include at least one selected from the group consisting of distilled water, ethanol, methanol, and isopropyl alcohol, specifically, distilled water, in terms of facilitating dispersion of the components.

In an example embodiment of the present invention, the solid content of the preliminary negative electrode slurry may be 20 parts by weight to 75 parts by weight, specifically 30 parts by weight to 70 parts by weight based on 100 parts by weight of the total preliminary negative electrode slurry.

The preliminary negative electrode slurry may have a viscosity at 25°C of 3000 cP to 6000 cP, specifically 4000 cP to 6000 cP.

Lithium silicate eluted from the negative electrode active material exists on the surface of the negative electrode active material included in the preliminary negative electrode slurry. In addition, the preliminary negative electrode slurry contains lithium by-products generated due to undoped and unreacted lithium during the preparation of the negative electrode active material. Specifically, the lithium by-products may be at least one selected from the group consisting of $Li_2O$, LiOH, and $Li_2CO_3$.

The preliminary negative electrode slurry becomes basic due to lithium silicate and lithium by-products.

The pH of the preliminary negative electrode slurry at 25°C may be 12.5 or more. Specifically, the pH may be 12.5 or more and 13 or less, or 12.5 or more and 12.8 or less. More specifically, the pH may be 12.5 or more and 12.6 or less, or 12.5.

The manufacturing method of the negative electrode according to an example embodiment of the present invention includes forming the negative electrode slurry by adding and mixing an acid to the preliminary negative electrode slurry (S2).

In an example embodiment of the present invention, the pH of the negative electrode slurry at 25°C is 10 or more and less than 12.5.

In an example embodiment of the present invention, the negative electrode slurry includes lithium silicate gel (Li-silicate Gel).

A peak may be shown at 2θ = 23.2 ± 0.5° during X-ray diffraction (XRD) analysis of the negative electrode slurry. Specifically, a peak may be shown around 2θ = 23.2°. The peak is due to the lithium silicate gel.

In the present specification, the X-ray diffraction analysis may be measured using an X-ray diffraction (XRD) device (product name: D4-endavor, manufacturer: bruker).

In the present specification, the gel means a form in which a sol forms a network structure of chemical bonds to be hardened. Specifically, the lithium silicate gel is a type of hydrogel and is produced by a reaction between lithium silicate and an acid. For example, lithium silicate gel may have a network structure in which silicon and oxygen are connected to each other in a network shape and lithium is bonded therein.

There is a problem that the base included in the preliminary negative electrode slurry reacts with Si present in the negative electrode active material to generate gas and change the rheological properties of the slurry. Accordingly, the acid is added and mixed to the preliminary negative electrode slurry to neutralize the base (OH-) present in the preliminary negative electrode slurry, thereby preventing the reaction of Si and the base included in the negative electrode active material.

In addition, lithium silicate eluted from the negative electrode active material containing the Li compound is present around the negative electrode active material, but the added acid promotes the gel formation of lithium silicate, and the negative electrode active material exists in the form in which the lithium silicate gel is formed around the negative electrode active material. Since water absorbed on the lithium silicate gel evaporates in the process of drying the electrode after subsequent rolling to increase the selective porosity around the negative electrode active material, there is an advantage of improving the lifespan by minimizing electrode deformation due to volume expansion of the negative electrode active material during charging and discharging of the battery.

In an example embodiment of the present invention, the acid may be at least one selected from the group consisting of phosphoric acid, acetic acid, citric acid, oxalic acid, and boric acid. In the case of using the acid, since the acidity is not high, there is an effect of not damaging chemical properties of the thickener, the binder, and the like when added to the slurry.

In an example embodiment of the present invention, pKa of the acid at 25°C may be 1 to 15, specifically 1.5 to 13. By using an acid that satisfies the pKa range, there is an effect of not damaging chemical properties of the thickener, the binder, and the like when added to the slurry. On the other hand, when a strong acid that does not satisfy the range is used, there is a problem in that the chemical damage to the thickener and the binder occurs, and excessive gelation occurs to increase excessively the viscosity of the slurry, thereby reducing the coating quality of the electrode.

In an example embodiment of the present invention, the acid may be added in an amount of 0.01 part by weight to 1.5 parts by weight based on 100 parts by weight of the total preliminary negative electrode slurry. Specifically, the acid may be added in an amount of 0.1 part by weight to 1 part by weight, or 0.1 part by weight to 0.8 part by weight. More specifically, the acid may be added in an amount of 0.4 part by weight to 0.8 part by weight, or 0.4 part by weight to 0.6 part by weight. When the acid content satisfies the range, there is an effect of generating an appropriate level of gelation. On the other hand, when the acid content exceeds the range, there is a problem in that the chemical damage to the thickener and the binder occurs, and excessive gelation occurs to increase excessively the viscosity of the slurry, thereby reducing the coating quality of the electrode.

Specifically, the lower limit of the acid content may be 0.01 part by weight, 0.1 part by weight, 0.2 part by weight, 0.3 part by weight, 0.4 part by weight or 0.5 part by weight, and the upper limit thereof may be 1.5 parts by weight, 1.4 parts by weight, 1.3 parts by weight, and 1.2 parts by weight, 1.1 parts by weight, 1 part by weight, 0.9 part by weight, 0.8 part by weight, 0.7 part by weight or 0.6 part by weight.

In an example embodiment of the present invention, the process of mixing the slurry may appropriately apply methods known in the art.

In an example embodiment of the present invention, the forming of the negative electrode slurry by adding and mixing the acid to the preliminary negative electrode slurry further includes adding and mixing a binder after adding and mixing the acid to the preliminary negative electrode slurry.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, poly acrylic acid and materials in which hydrogens thereof are substituted with Li, Na or Ca, and also include various copolymers thereof.

In an example embodiment of the present invention, the binder may be included in the negative electrode slurry in an amount of 0.5 part by weight to 30 parts by weight, specifically 1 part by weight to 20 parts by weight, more specifically 1 part by weight to 5 parts by weight, based on 100 parts by weight of the total negative electrode slurry.

In an example embodiment of the present invention, the pH of the negative electrode slurry at 25°C is 10 or more and less than 12.5. The pH of the negative electrode slurry may be specifically more than 10 and 12 or less, or 10.5 or more and less than 12, more specifically 11 or more and 11.5 or less. When the pH of the negative electrode slurry satisfies the range, an appropriate amount of gelation occurs so that the produced gel has an effect of serving as a buffer for volume expansion in the electrode. On the other hand, when the pH of the negative electrode slurry is less than 10, there is a problem in that coating uniformity of the electrode is deteriorated due to excessive gelation, and when the pH of the negative electrode slurry exceeds 12.5, there is a problem in that the gas generation in the slurry state is accelerated.

The lower limit of the pH of the negative electrode slurry may be 10, 10.5, 10.6, 10.7, 10.8 or 10.9, and the upper limit thereof may be 12.4, 12, 11.9, 11.8, 11.7, 11.6 or 11.5.

In an example embodiment of the present invention, the negative electrode slurry may have a viscosity at 25°C of 6000 cP to 20000 cP, specifically 8000 cP to 15000 cP.

When the viscosity of the negative electrode slurry is within the range, the coating property of the negative electrode slurry is improved, so that it is possible to implement a negative electrode having an excellent quality state. At this time, the viscosity may be measured using a viscometer (device name: HR20, manufacturer: TA) at 25°C.

The manufacturing method of the negative electrode according to an example embodiment of the present invention includes forming a negative electrode active material layer by applying the negative electrode slurry on at least one surface of a current collector and first drying and rolling the slurry (S3).

The current collector is a negative electrode current collector, which is not particularly limited as long as the current collector has conductivity without causing a chemical change in the corresponding battery. For example, as the current collector, copper, stainless steel, aluminum, nickel, titanium, calcined carbon, aluminum or stainless steel surface-treated with carbon, nickel, titanium, silver, etc., and the like may be used. Specifically, a transition metal that easily adsorbs carbon, such as copper or nickel, may be used as the current collector. The thickness of the current collector may be 6 $\mu$m to 20 $\mu$m, but the thickness of the current collector is not limited thereto.

A method of applying the negative electrode slurry is not particularly limited as long as the method is methods commonly used in the art. For example, a coating method using a slot die may be used, and in addition, a Mayer bar coating method, a gravure coating method, a dip coating method, a spray coating method, and the like may be used.

The first drying of the negative electrode slurry may be performed at 80°C to 110°C for 3 minutes to 1 hour.

Specifically, the first drying may be performed for 3 minutes to 1 hour, 3 minutes to 30 minutes, and 3 minutes to 10 minutes in a chamber in which hot air is circulated. More specifically, the first drying may be performed for 5 minutes. When the range is satisfied, there is an effect of removing moisture except for water inside the gel.

Specifically, the first drying may be performed at 80°C to 110°C, preferably 90°C to 100°C, and when the range is satisfied, there is an effect of removing moisture except for water inside the gel.

During the first drying, main moisture (free water) included in the current collector applied with the negative electrode slurry is evaporated, but moisture adsorbed on the lithium silicate gel is not evaporated.

In addition, the lithium silicate gel is contracted to be firmly coated around the negative electrode active material, and a lithium silicate gel coating layer acts as a resistor to prevent Li elution from the negative electrode active material.

The rolling step may be performed by appropriately adopting a method commonly used in the art.

In this case, the packing density may be 1 g/cc to 2 g/cc, but is not limited thereto.

The manufacturing method of the negative electrode according to an example embodiment of the present invention includes second drying the current collector on which the negative electrode active material layer is formed (S4).

The second drying of the current collector may be performed at 80°C to 130°C for 6 hours to 10 hours. When the range is satisfied, there is an effect of removing the remaining water inside the gel.

Specifically, the second drying may be performed under a condition of 8 hours using a vacuum chamber. When the range is satisfied, there is an effect of removing the remaining water inside the gel.

Specifically, the second drying may be performed at 80°C to 130°C, preferably 100°C to 130°C, and when the range is satisfied, there is an effect of removing the remaining water inside the gel.

During the second drying, the moisture of the lithium silicate gel located around the negative electrode active material included in the negative electrode active material layer is evaporated, and in this process, the porosity around the negative electrode active material may be increased. The formed pores serve to improve the lifespan of the battery by minimizing deformation of the negative electrode due to volume expansion of the negative electrode active material during charging and discharging of the battery.

The BET specific surface area of the negative electrode after the second drying may be 2 $m^2$/g to 5 $m^2$/g, specifically 2 $m^2$/g to 4 $m^2$/g, more specifically 2 $m^2$/g g to 3 $m^2$/g, and more specifically 2.5 $m^2$/g to 3 $m^2$/g.

The BET specific surface area of the negative electrode after the second drying may be increased by 5% to 40% from the BET specific surface area of the negative electrode (the current collector on which the negative electrode active material layer is formed) before the second drying. Specifically, the BET specific surface area of the negative electrode after the second drying may be increased by 10% to 40%, 15% to 38%, 18% to 35% or 20% to 35%.

The negative electrode manufactured by the manufacturing method according to the present invention may provide a larger specific surface area than that of a conventional negative electrode because pores are formed through gelation according to acid addition. In addition, in the case of the conventional negative electrode, since the lithium silicate gel is not formed, there is little change in the specific surface area of the negative electrode according to the second drying. However, the negative electrode according to the present invention has an advantage of minimizing the deformation of the negative electrode due to the volume expansion of the negative electrode active material during charging and discharging of the battery by evaporating the moisture adsorbed on the lithium silicate gel in the negative electrode active material layer through the second drying to increase the porosity around the negative electrode active material.

An example embodiment of the present invention provides a negative electrode manufactured by the manufacturing method. The negative electrode manufactured as described above may include a structure in which pores are formed around the negative electrode active material.

Specifically, the BET specific surface area of the negative electrode may be 2 $m^2/g$ to 5 $m^2/g$, specifically 2 $m^2/g$ to 4 $m^2/g$, more specifically 2 $m^2/g$ g to 3 $m^2/g$, and more specifically 2.5 $m^2/g$ to 3 $m^2/g$. The BET specific surface area of a negative electrode manufactured by a general method is smaller than 2 $m^2/g$, but the negative electrode manufactured by the manufacturing method according to the present invention may provide a larger specific surface area than a general negative electrode because the pores are formed through gelation according to acid addition. When the negative electrode has the BET specific surface area in the above range, the deformation of the negative electrode due to the volume expansion of the negative electrode active material during charging and discharging of the battery is minimized to improve the lifespan of the battery.

An example embodiment of the present invention provides a negative electrode comprising a current collector; and a negative electrode active material layer provided on the current collector, wherein the negative electrode active material layer includes a negative electrode active material, the negative electrode active material includes silicon-based particles containing a Li compound, and the pH of a dispersion obtained by mixing 5 g of the negative electrode active material layer and 100 g of water after the negative electrode active material layer is separated from the current collector is 10 or more and less than 12.5 at 25°C.

The pH of the negative electrode dispersion may be 10 or more and less than 12, 10.5 or more and 12 or less, 10.7 or more and 11.7 or less, or 10.8 or more and 11.6 or less at 25°C.

When a conventional negative electrode includes the negative electrode active material including the silicon-based particles containing the Li compound, a very high pH is shown when the negative electrode active material layer including the negative electrode active material is separated and mixed with water. On the other hand, even if the negative electrode of the present invention uses the silicon-based particles containing the Li compound as the negative electrode active material, when the negative electrode is separated from the current collector and then mixed with water to measure the pH, the pH is lower than that of the conventional negative electrode, resulting in significantly improved charge/discharge capacity, initial efficiency, and lifespan.

In an example embodiment of the present invention, the packing density of the negative electrode may be 1 g/cc to 2 g/cc, and the BET specific surface area of the negative electrode may be 2 $m^2/g$ to 5 $m^2/g$.

When the conventional negative electrode includes the negative electrode active material including the silicon-based particles containing the Li compound, there is a problem in that since the specific surface area of the negative electrode is less than 2 $m^2/g$, a change in volume of the negative electrode active material is not accepted to be vulnerable to electrode deformation. On the other hand, since the negative electrode of the present invention has the BET specific surface area of 2 $m^2/g$ to 5 $m^2/g$, a space around the negative electrode active material may be secured in the negative electrode to minimized electrode deformation due to volume expansion of the negative electrode active material, so that there is an effect of improving the lifespan of the electrode.

In addition, the produced lithium silicate gel is contracted to be coated around the negative electrode active material, and the lithium silicate gel coating layer acts as a resistor to prevent Li elution from the negative electrode active material.

In an example embodiment of the present invention, the aforementioned contents may be equally applied to the negative electrode active material and the negative electrode active material layer included in the negative electrode.

In an example embodiment of the present invention, the negative electrode active material may include 4 parts by weight to 12 parts by weight of Li based on 100 parts by weight of the negative electrode active material.

In an example embodiment of the present invention, the negative electrode active material layer may further include a carbon-based active material. Specifically, the weight ratio of the negative electrode active material and the carbon-based active material may be 30:70 to 5:95. More specifically, the weight ratio of the negative electrode active material and the carbon-based active material may be 20:80 to 10:90, 16:84 to 14:86, or 15:85.

The negative electrode according to the above-described example embodiments exhibits a lower pH and a higher BET specific surface area than the conventional negative electrode, resulting in significantly improved charge/discharge capacity, initial efficiency, and lifespan.

The negative electrode according to an example embodiment of the present invention includes a current collector and a negative electrode active material layer disposed on the current collector. The negative electrode active material layer includes the negative electrode active material and the conductive material described above.

The negative electrode active material layer may further include the thickener and the binder described above.

The secondary battery according to an example embodiment of the present invention may include a negative electrode according to the aforementioned example embodiment. Specifically, the secondary battery may include a negative electrode, a positive electrode, a separator interposed between the positive electrode and the negative electrode, and an electrolyte, and the negative electrode is the same as the aforementioned negative electrode. Since the negative electrode has been described above, a detailed description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change in the battery, and for example, stainless steel, aluminum, nickel, titanium, calcined carbon or aluminum or stainless steel surface-treated with carbon, nickel, titanium, silver, etc., may be used. In addition, the positive electrode current collector may generally have a thickness of 3 to 500 $\mu$m, and fine unevenness may be formed on the surface of the current collector to increase the adhesion of the positive electrode active material. For example, the positive electrode current collector may be used in various forms, such as a film, a sheet, a foil, a net, a porous body, a foam body, and a non-woven body.

The positive electrode active material may be a commonly used positive electrode active material. Specifically, the positive electrode active material may include layered compounds such as lithium cobalt oxide ($LiCoO_2$) and lithium nickel oxide ($LiNiO_2$), or compounds substituted with one or more transition metals; lithium iron oxides such as $LiFe_3O_4$; lithium manganese oxides of Chemical Formula $Li_{1+c1}Mn_{2-c1}O_4$ ($0 \leq c1 \leq 0.33$), such as $LiMnO_3$, $LiMn_2O_3$, $LiMnO_2$, etc.; lithium copper oxide ($Li_2CuO_2$); vanadium oxides such as $LiV_3O_8$, $V_2O_5$, and $Cu_2V_2O_7$; Ni site-type lithium nickel oxides represented by Chemical Formula $LiNi_{1-c2}M_{c2}O_2$ (wherein, M is at least one selected from the group consisting of Co, Mn, Al, Cu, Fe, Mg, B and Ga, and satisfies $0.01 \leq c2 \leq 0.5$); lithium-manganese composite oxides represented by Chemical Formula $LiMn_{2-c3}M_{c3}O_2$ (wherein, M is at least one selected from the group consisting of Co, Ni, Fe, Cr, Zn, and Ta, and satisfies $0.01 \leq c3 \leq 0.1$) or $Li_2Mn_3MO_8$ (wherein, M is at least one selected from the group consisting of Fe, Co, Ni, Cu, and Zn.); $LiMn_2O_4$ in which part of Li in Chemical Formula is substituted with alkaline earth metal ions; and the like, but is not limited thereto. The positive electrode may also be Li-metal.

The positive electrode active material layer may include a positive electrode conductive material and a positive electrode binder together with the above-described positive electrode active material.

In this case, the positive electrode conductive material is used to impart conductivity to the electrode, and in the configured battery, the positive electrode conductive material can be used without any particular limitation as long as the positive electrode conductive material has electronic conductivity without causing a chemical change. As a specific example, the positive electrode conductive material may include graphite such as natural graphite and artificial graphite; carbon-based materials such as carbon black, acetylene black, ketjen black, channel black, furnace black, lamp black, thermal black, and carbon fiber; metal powder or metal fiber such as copper, nickel, aluminum, and silver; conductive whiskeys such as zinc oxide and potassium titanate; conductive metal oxides such as titanium oxide; or conductive polymers such as polyphenylene derivatives, or the like, and may be used with one type alone or a mixture of 2 types or more thereof.

In addition, the positive electrode binder serves to improve attachment between the positive electrode active material particles and adhesion between the positive electrode active material and the positive electrode current collector. As a specific example, the positive electrode binder may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylene-propylene-diene monomer (EPDM), sulfonated-EPDM, styrene butadiene rubber (SBR), fluororubber, various copolymers thereof, or the like, and may be used with one type alone or a mixture of 2 types or more thereof.

The separator separates the negative electrode and the positive electrode and provides a moving path for lithium ions, and generally, as long as the separator is used as separators in the secondary battery, the separator can be used without any particular limitation, and in particular, it is preferable to have low resistance to ion movement of the electrolyte and to have excellent moisture content in the electrolyte. Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure of two or more layers thereof may be used. In addition, a general porous nonwoven fabric, for example, a nonwoven fabric made of high melting point glass fiber, polyethylene terephthalate fiber, etc., may also be used. In addition, in order to secure heat resistance or mechanical strength, a coated separator containing a ceramic component or a polymer material may be used, and may optionally be used in a single-layer or multi-layer structure.

Examples of the electrolyte may include organic liquid electrolytes, inorganic liquid electrolytes, solid polymer electrolytes, gel-type polymer electrolytes, solid inorganic electrolytes, and molten inorganic electrolytes that can be used in manufacturing the lithium secondary battery, but are not limited thereto.

Specifically, the electrolyte may include a non-aqueous organic solvent and a metal salt.

Examples of the non-aqueous organic solvent may be used with aprotic organic solvents, such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, trimester phosphate, trimethoxymethane, dioxolane derivative, sulfolane, methyl sulfolane, 1,3-dimethyl-2-imidazolidinone, propylene carbonate derivatives, tetrahydrofuran derivatives, ether, methyl pyropionate, and ethyl pyropionate.

In particular, among the carbonate-based organic solvents, ethylene carbonate and propylene carbonate, which are cyclic carbonates, are highly viscous organic solvents and may be preferably used due to a high dielectric constant to dissociate lithium salts well. When the cyclic carbonate is mixed and used with linear carbonate having low-viscosity and low-dielectric constant such as dimethyl carbonate and diethyl carbonate in an appropriate ratio, an electrolyte having high electrical conductivity may be prepared, which may be more preferably used.

A lithium salt may be used as the metal salt, and the lithium salt is a material that is easily soluble in the non-aqueous electrolyte, and for example, negative ions of the lithium salt may be used with at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In addition to the electrolyte components, the electrolyte may also further include one or more additives of, for example, haloalkylene carbonate-based compounds such as difluoroethylene carbonate, pyridine, triethyl phosphite, triethanolamine, cyclic ether, ethylene diamine, n-glyme, hexaphosphoric acid triamide, nitrobenzene derivatives, sulfur, quinone imine dye, N-substituted oxazolidinone, N,N-substituted imidazolidine, ethylene glycol dialkyl ether, ammonium salt, pyrrole, 2-methoxyethanol or aluminum trichloride, for the purpose of improving life characteristics of the battery, suppressing reduction in battery capacity, improving a battery discharge capacity, and the like.

According to another example embodiment of the present invention, there is provided a battery module including the secondary battery as a unit cell and a battery pack including the battery module. Since the battery module and the battery pack include the secondary battery having high capacity, high rate-controlling characteristics and cycle characteristics, the battery module and the battery pack may be used as a power source for a medium-to-large device selected from the group consisting of an electric vehicle, a hybrid electric vehicle, a plug-in hybrid electric vehicle, and a power storage system.

[Modes of the Invention]

Hereinafter, preferred Examples of the present invention will be provided in order to facilitate understanding of the present invention, but it will be apparent to those skilled in the art that the following Examples are only illustrative of the present invention and various changes and modifications can be made within the scope and spirit of the present invention, and it is natural that these variations and modifications are within the scope of the appended claims.

**<Examples and Comparative Examples>**

**Example 1**

1) Preparation of negative electrode slurry

A SiOx (x = 1) active material (average particle diameter (D50): 6 $\mu$m) containing 8 wt% Li as a silicon-based negative electrode active material and graphite (average particle diameter (D50): 20 $\mu$m) as a carbon-based negative electrode active material were mixed in a weight ratio of 15:85 to be used as a negative electrode material. The negative electrode material, a conductive material (Super C65), and a thickener (carboxymethyl cellulose, CMC) were mixed in a weight ratio of 98:1:1, and added to distilled water as a solvent for forming a negative electrode slurry to prepare a preliminary negative electrode slurry.

The preliminary negative electrode slurry and boric acid ($H_3BO_3$, pKa = 9.2 at 25°C) were added in a weight ratio of 99.5:0.5 and mixed.

Thereafter, a negative electrode slurry was prepared by mixing a binder styrene-butadiene rubber, SBR) with the preliminary negative electrode slurry to which an acid was added in a weight ratio of 98:2.

2) Manufacture of negative electrode

The negative electrode slurry was coated on one surface of a copper current collector (thickness: 15 $\mu$m) as a current collector at a loading amount of 3.6 mAh/cm$^2$, dried (first dried) for 5 minutes in a chamber of 100°C and then roll-pressed to manufacture a preliminary electrode having a packing density of 1.6 g/cc.

The preliminary electrode was dried (second dried) in a vacuum chamber at 130°C for 8 hours to manufacture a final electrode (negative electrode).

**Example 2**

A negative electrode was manufactured in the same manner as in Example 1, except for using phosphoric acid

(H$_3$PO$_4$, pKa = 2.16 at 25°C) instead of boric acid.

### Example 3

A negative electrode was manufactured in the same manner as in Example 1, except that a mixing ratio of the preliminary negative electrode slurry and boric acid was 99:1.

### Example 4

A negative electrode was manufactured in the same manner as in Example 1, except that a preliminary electrode was dried at 100°C for 8 hours in a vacuum chamber.

### Comparative Example 1

A negative electrode was manufactured in the same manner as in Example 1, except that a preliminary negative electrode slurry was not added with boric acid.

### Comparative Example 2

A negative electrode was manufactured in the same manner as in Example 1, except that a preliminary negative electrode slurry was not added with boric acid and rolled so that the packing density during rolling was 1.5 g/cc.

### Comparative Example 3

A negative electrode was manufactured in the same manner as in Example 1, except for using hydrochloric acid (HCl, pKa = - 6.3 at 25°C) instead of boric acid.
The compositions of the negative electrode slurries and the negative electrodes prepared in Examples and Comparative Examples were shown in Tables 1 and 2 below.
In addition, in the negative electrodes manufactured in Examples and Comparative Examples, the negative electrode active material layer was separated from the current collector, and then 5 g of the negative electrode active material layer and 100 g of water were mixed to prepare a dispersion, and then the pH was measured and shown in Table 2.

[Table 1]

| | Type of acid | Acid content (based on 100 parts by weight of prelimina ry negative electrode slurry) | pH of prelimina ry negative electrode slurry | pH of negative electrode slurry | Specific surface area of negative electrode before second drying (m$^2$/g) | Specific surface area of negative electrode after second drying (m$^2$/g) | Specific surface area change rate (%) |
|---|---|---|---|---|---|---|---|
| Example 1 | Boric acid | 0.5 | 12.5 | 11.5 | 2.0 | 2.5 | 25.0 |
| Example 2 | Phosphor ic acid | 0.5 | 12.5 | 10.9 | 2.1 | 2.8 | 33.3 |
| Example 3 | Boric acid | 1 | 12.5 | 11.0 | 2.5 | 3.0 | 20.0 |
| Example 4 | Boric acid | 0.5 | 12.5 | 11.5 | 2.1 | 2.6 | 23.8 |
| Compara tive Example 1 | - | 0 | 12.5 | 12.5 | 1.9 | 1.9 | 0.0 |

(continued)

| | Type of acid | Acid content (based on 100 parts by weight of prelimina ry negative electrode slurry) | pH of prelimina ry negative electrode slurry | pH of negative electrode slurry | Specific surface area of negative electrode before second drying (m$^2$/g) | Specific surface area of negative electrode after second drying (m$^2$/g) | Specific surface area change rate (%) |
|---|---|---|---|---|---|---|---|
| Compara tive Example 2 | - | 0 | 12.5 | 12.5 | 1.6 | 1.6 | 0.0 |
| Compara tive Example 3 | Hydrochl oric acid | 0.5 | 12.5 | 9.5 | 3.5 | 5.2 | 48.6 |

[Table 2]

| | Li content (based on active material , wt%) | Li-SiO: graphite | Packing density | Specific surface area (m$^2$/g) of negative electrode | pH (25°C) of negative electrode dispersion |
|---|---|---|---|---|---|
| Example 1 | 8 | 15:85 | 1.6g/cc | 2.5 | 11.4 |
| Example 2 | 8 | 15:85 | 1.6g/cc | 2.8 | 10.8 |
| Example 3 | 8 | 15:85 | 1.6g/cc | 3.0 | 11.0 |
| Example 4 | 8 | 15:85 | 1.6g/cc | 2.6 | 11.6 |
| Comparative Example 1 | 8 | 15:85 | 1.6g/cc | 1.9 | 12.7 |
| Comparative Example 2 | 8 | 15:85 | 1.5g/cc | 1.6 | 12.6 |
| Comparative Example 3 | 8 | 15:85 | 1.6g/cc | 5.2 | 9.5 |

The BET specific surface area of the negative electrode may be measured by a BET 6-point method by degassing at 130°C for 5 hours and performing N$_2$ absorption/desorption at 77 K using a BET measuring device (BEL-SORP-MAX, Nippon Bell).

**<Experimental Example: Evaluation of discharge capacity, initial efficiency, lifespan (capacity retention rate) characteristics>**

A lithium (Li) metal thin film obtained by cutting the negative electrode prepared in Examples and Comparative Examples into a circular shape of 1.7671 cm$^2$ was used as a positive electrode. A separator made of porous polyethylene was interposed between the positive electrode and the negative electrode, vinylene carbonate dissolved in 0.5 part by weight was dissolved in a mixed solution having a mixing volume ratio of methyl ethyl carbonate (EMC) and ethylene carbonate (EC) of 7:3, and an electrolyte in which 1 M concentration of LiPF$_6$ was dissolved was injected to prepare a lithium coin half-cell.

By performing charging and discharging on the prepared battery, the discharge capacity, the initial efficiency, and the capacity retention rate were evaluated, which were shown in Table 3 below.

At Cycles 1 and 2, charging and discharging were performed at 0.1 C, and from Cycle 3, the charging and discharging were performed at 0.5 C. 300 Cycles were terminated in the charged state (the state in which lithium was included in the negative electrode).

Charging condition: CC (constant current)/CV (constant voltage) (5 mV/0.005 C current cut-off)

Discharging condition: CC (constant current) condition 1.5 V

Through the results of one charge and discharge, the discharge capacity (mAh/g) and the initial efficiency (%) were derived. Specifically, the initial efficiency (%) was derived by the following Equation.

$$\text{Initial efficiency (\%)} = (\text{discharge capacity after one discharge/one charge capacity}) \times 100$$

The capacity retention rate and the electrode thickness change rate were derived by the following Equation, respectively.

$$\text{Capacity retention rate (\%)} = (299 \text{ times discharge capacity/Once discharge capacity}) \times 100$$

[Table 3]

| Battery | Discharge capacity (mAh/g) | Initial efficiency (%) | Capacity retention rate (%) |
|---|---|---|---|
| Example 1 | 506 | 91.2 | 89.5 |
| Example 2 | 506 | 91.1 | 88.5 |
| Example 3 | 506 | 91.1 | 88.6 |
| Example 4 | 506 | 91.2 | 88.7 |
| Comparative Example 1 | 506 | 91.2 | 80.9 |
| Comparative Example 2 | 506 | 90.9 | 81.2 |
| Comparative Example 3 | 506 | 90.8 | 80.6 |

The manufacturing method according to the present invention includes a process of adding an acid when preparing the negative electrode slurry, and the porosity of the negative electrode is increased from the lithium silicate gel formed from the process to obtain a negative electrode having a high specific surface area and with a low pH of the negative electrode dispersion.

In Tables 1 to 3, it can be seen that even though Examples 1 to 4 use the silicon-based particles containing the Li compound, the negative electrode slurry and the negative electrode exhibit a lower pH than the related art, the porosity increases around the negative electrode active material, so that the specific surface area increases, and the space around the negative electrode active material may be secured in the negative electrode to minimize electrode deformation due to volume expansion of the negative electrode active material, so that the discharge capacity, initial efficiency and capacity retention rate are all excellent.

On the other hand, in Comparative Examples 1 and 2, it was confirmed that since the acid was not added when the negative electrode was manufactured, the lithium silicate gel was not formed, the pores in the electrode were not developed, and as a result, the pH of the negative electrode dispersion was high, the specific surface area of the negative electrode was lowered, and the volume expansion/contraction of the electrode was severe during charging and discharging, and thus, the capacity retention rate of the battery was greatly reduced.

In Comparative Example 3, it was confirmed that since the pH of the negative electrode slurry was too low, excessive gelation occurred and the specific surface area of the negative electrode was too high, and as a result, it was confirmed that the capacity retention rate of the battery was greatly reduced.

**Claims**

1.   A manufacturing method of a negative electrode comprising steps of:

preparing a preliminary negative electrode slurry containing a negative electrode active material containing silicon-based particles containing a Li compound and a conductive material;

forming a negative electrode slurry by adding and mixing an acid to the preliminary negative electrode slurry;

forming a negative electrode active material layer by applying the negative electrode slurry on at least one surface of a current collector and first drying and rolling the slurry; and

second drying the current collector on which the negative electrode active material layer is formed,

wherein the pH of the negative electrode slurry at 25°C is 10 or more and less than 12.5.

2. The manufacturing method of the negative electrode of claim 1, wherein the pH of the preliminary negative electrode slurry at 25°C is 12.5 or more and 13 or less.

3. The manufacturing method of the negative electrode of claim 1, wherein the preliminary negative electrode slurry further comprises a thickener.

4. The manufacturing method of the negative electrode of claim 1, wherein the forming of the negative electrode slurry by adding and mixing the acid to the preliminary negative electrode slurry further comprises adding and mixing a binder after adding and mixing the acid to the preliminary negative electrode slurry.

5. The manufacturing method of the negative electrode of claim 1, wherein the acid is at least one selected from the group consisting of phosphoric acid, acetic acid, citric acid, oxalic acid, and boric acid.

6. The manufacturing method of the negative electrode of claim 1, wherein the pKa at 25°C of the acid is 1.5 to 13.

7. The manufacturing method of the negative electrode of claim 1, wherein the acid is added in an amount of 0.01 to 1.5 parts by weight based on 100 parts by weight of the total preliminary negative electrode slurry.

8. The manufacturing method of the negative electrode of claim 1, wherein the viscosity at 25°C of the negative electrode slurry is 6000 cP to 20000 cP.

9. The manufacturing method of the negative electrode of claim 1, wherein the negative electrode active material layer formed by the first drying and rolling comprises a lithium silicate gel.

10. The manufacturing method of the negative electrode of claim 1, wherein the BET specific surface area of the negative electrode after the second drying is increased by 5% to 40% from the BET specific surface area of the negative electrode before the second drying.

11. A negative electrode manufactured by the manufacturing method according to any one of claims 1 to 10.

12. The negative electrode of claim 11, wherein the BET specific surface area of the negative electrode is 2 $m^2$/g to 5 $m^2$/g.

13. A negative electrode comprising a current collector; and a negative electrode active material layer provided on the current collector,

wherein the negative electrode active material layer includes a negative electrode active material,

the negative electrode active material includes silicon-based particles containing a Li compound, and

the pH of a dispersion obtained by mixing 5 g of the negative electrode active material layer and 100 g of water after separating the negative electrode active material layer from the current collector is 10 or more and less than 12.5 at 25°C.

14. The negative electrode of claim 13, wherein the packing density of the negative electrode is 1 g/cc to 2 g/cc, and the BET specific surface area of the negative electrode is 2 $m^2$/g to 5 $m^2$/g.

15. The negative electrode of claim 13, wherein the negative electrode active material contains 4 to 12 parts by weight of Li based on 100 parts by weight of the negative electrode active material,

the negative electrode active material layer further comprises a carbon-based active material, and

a weight ratio of the negative electrode active material and the carbon-based active material is 30:70 to 5:95.

16. The negative electrode of claim 13, wherein the negative electrode active material layer is coated with a loading amount of 3 mAh/cm$^2$ to 4 mAh/cm$^2$.

17. A secondary battery comprising the negative electrode according to claim 11.

## INTERNATIONAL SEARCH REPORT

International application No.

**PCT/KR2022/016908**

### A. CLASSIFICATION OF SUBJECT MATTER

**H01M 4/1391**(2010.01)i; **H01M 4/04**(2006.01)i; **H01M 4/48**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/1391(2010.01); H01M 10/052(2010.01); H01M 10/38(2006.01); H01M 10/40(2006.01); H01M 4/36(2006.01); H01M 4/58(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬(lithium), 실리콘(silicon), 음극(anode), 슬러리(slurry), pH, 산(acid)

### C. DOCUMENTS CONSIDERED TO BE RELEVANT

| Category* | Citation of document, with indication, where appropriate, of the relevant passages | Relevant to claim No. |
|---|---|---|
| X | KR 10-2015-0040105 A (LG CHEM, LTD.) 14 April 2015 (2015-04-14)<br>See claims 1, 4 and 13-14; and paragraph [0031]. | 11-17 |
| A | | 1-10 |
| A | KR 10-2020-0102525 A (AMPRIUS, INC.) 31 August 2020 (2020-08-31)<br>See abstract; and claim 1. | 1-17 |
| A | CN 101154720 A (SHENZHEN BIKE BATTERY CO., LTD. et al.) 02 April 2008 (2008-04-02)<br>See claims 1-10. | 1-17 |
| A | WO 2021-083199 A1 (BTR NEW MATERIAL GROUP CO., LTD. et al.) 06 May 2021 (2021-05-06)<br>See claims 1-14. | 1-17 |
| A | 정민환. 음극 리튬 이온 전지 슬러리의 pH에 따른 유변학 및 건조 거동 연구. 서울대학교. 2019<br>(JEONG, Min Hwan. Drying behavior and rheological properties of Li-ion anode model slurries at different pH. The Graduate School Seoul National University.)<br>See pages 10-11. | 1-17 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 February 2023** | **27 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/016908**

| Patent document cited in search report | | | Publication date (day/month/year) | Patent family member(s) | | | Publication date (day/month/year) |
|---|---|---|---|---|---|---|---|
| KR | 10-2015-0040105 | A | 14 April 2015 | KR | 10-1676405 | B1 | 29 November 2016 |
| KR | 10-2020-0102525 | A | 31 August 2020 | CN | 112219296 | A | 12 January 2021 |
| | | | | EP | 3740986 | A1 | 25 November 2020 |
| | | | | JP | 2021-511629 | A | 06 May 2021 |
| | | | | TW | 201937799 | A | 16 September 2019 |
| | | | | US | 11152613 | B2 | 19 October 2021 |
| | | | | US | 2019-0237761 | A1 | 01 August 2019 |
| | | | | US | 2022-0006079 | A1 | 06 January 2022 |
| | | | | WO | 2019-144026 | A1 | 25 July 2019 |
| CN | 101154720 | A | 02 April 2008 | None | | | |
| WO | 2021-083199 | A1 | 06 May 2021 | CN | 112751027 | A | 04 May 2021 |
| | | | | EP | 3972014 | A1 | 23 March 2022 |
| | | | | KR | 10-2022-0002639 | A | 06 January 2022 |
| | | | | US | 2022-0259053 | A1 | 18 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210148034

- KR 100794192